# EUROPÄISCHE PATENTSCHRIFT

(11) **EP 3 193 440 B1**
(45) Veröffentlichungstag und Bekanntmachung des Hinweises auf die Patenterteilung: **15.08.2018**
(21) Anmeldenummer: 16204297.2
(22) Anmeldetag: 15.12.2016
(51) Int. Cl.: H02M 7/483

(54) **UMRICHTERANORDNUNG SOWIE VERFAHREN ZU DEREN BETRIEB**
CONVERTER SYSTEM AND METHOD FOR OPERATING THE SAME
SYSTÈME DE CONVERTISSEUR ET SON PROCÉDÉ DE FONCTIONNEMENT

(30) Priorität: 15.01.2016 DE 102016200473
(43) Veröffentlichungstag der Anmeldung: 19.07.2017
(73) Patentinhaber: Siemens Aktiengesellschaft, 80333 München (DE)
(72) Erfinder: Dommaschk, Mike, 91096 Möhrendorf (DE); Goblirsch, Wolfgang, 90587 Tuchenbach (DE); Habermeier, Alfred, 91058 Erlangen (DE); Lang, Jörg, 95346 Stadtsteinach (DE); Siegl, Christian, 90518 Altdorf (DE); Wieners-Rehrmann, Tobias, 91077 Neunkirchen am Brand (DE)

(56) Entgegenhaltungen:
- EP-A1- 0 898 442
- EP-A1- 1 363 451
- WO-A1-2013/178249
- DE-A1- 19 530 485
- DE-A1- 19 530 643
- DE-A1- 19 909 646
- DE-A1-102011 017 597

## Beschreibung

Die Erfindung bezieht sich u. a. auf eine Umrichteranordnung mit den Merkmalen gemäß dem Oberbegriff des Patentanspruchs 1.

Aus der europäischen Offenlegungsschrift EP 2 884 825 A1 ist eine Umrichteranordnung bekannt; diese umfasst eine oder mehrere Reihenschaltungen mit jeweils mindestens zwei in Reihe geschalteten Teilmodulen. Die Teilmodule weisen jeweils mindestens einen Schalter auf und sind jeweils an einem vorgegebenen elektrischen Einbauplatz der Umrichteranordnung eingebaut. Die Ansteuerung der Teilmodule erfolgt mittels einer Zentraleinheit.

Eine artgemäße Umrichteranordnung ist aus der DE 10 2011 017 597 A1 bekannt.

Der Erfindung liegt die Aufgabe zugrunde, eine Umrichteranordnung anzugeben, die einen besonders kontrollierten Betrieb ermöglicht.

Diese Aufgabe wird erfindungsgemäß durch eine Umrichteranordnung mit den Merkmalen gemäß Patentanspruch 1 gelöst. Vorteilhafte Ausgestaltungen der erfindungsgemäßen Umrichteranordnung sind in Unteransprüchen angegeben.

Danach ist erfindungsgemäß vorgesehen, dass die Teilmodule jeweils einen Speicher aufweisen, in dem eine das jeweilige Teilmodul eindeutig identifizierende Kennung, insbesondere Seriennummer, abgespeichert ist, und die Teilmodule jeweils eine Steuereinrichtung aufweisen, die die abgespeicherte Kennung über eine das jeweilige Teilmodul und die Zentraleinheit verbindende Kommunikationsverbindung an die Zentraleinheit übermitteln kann.

Ein wesentlicher Vorteil der erfindungsgemäßen Umrichteranordnung ist darin zu sehen, dass den Teilmodulen jeweils Kennungen zugeordnet sind, die die Teilmodule jeweils eindeutig identifizieren. Die Kennungen sind in einem Speicher abgespeichert und ermöglichen es einer moduleigenen Steuereinrichtung der Teilmodule, die abgespeicherte Kennung an die Zentraleinheit zu übermitteln. Die Zentraleinheit hat somit die Möglichkeit, regelmäßig oder unregelmäßig die Kennungen abzufragen und zu prüfen, ob die empfangenen Kennungen mit Sollkennungen bzw. vorab abgespeicherten Kennungen übereinstimmen. Ist dies nicht der Fall, kann die Zentraleinheit beispielsweise vorab definierte Maßnahmen treffen, wie zum Beispiel Warnsignale erzeugen oder die Umrichteranordnung abschalten.

Im Rahmen der Überprüfung der Kennungen kann beispielsweise festgestellt werden, ob die Umrichteranordnung vor der Inbetriebnahme richtig konfiguriert wurde und Teilmodule tatsächlich an denjenigen Einbauplätzen verbaut worden sind, für die sie vorgesehen waren. Es kann also beispielsweise eine fehlerhafte Konfigurierung erkannt werden.

Alternativ oder zusätzlich ist es beispielsweise möglich, während des Betriebs der Umrichteranordnung festzustellen, wenn Teilmodule ausgewechselt worden sind, so dass die Zentraleinheit die Konfiguration der Umrichteranordnung bzw. die Ausstattung der Umrichteranordnung mit Teilmodulen jeweils prüfen kann. So ist es beispielsweise auch möglich, dass die Zentraleinheit die Betriebsdauer von Teilmodulen teilmodulindividuell ermittelt oder erfasst, da sie einen Teilmodulwechsel einbauplatzindividuell erkennen kann.

Bei der Kommunikationsverbindung kann es sich z. B. um eine drahtgebundene oder kabelgebundene, beispielsweise optische oder elektrische, Kommunikationsverbindung oder auch um eine drahtlose Kommunikationsverbindung, insbesondere Funkverbindung, handeln.

Als besonders vorteilhaft wird es angesehen, wenn die Steuereinrichtungen der Teilmodule jeweils derart ausgestaltet sind, dass sie nach Aufforderung durch die Zentraleinheit die Kennung ihres Teilmoduls an die Zentraleinheit übermitteln. Bei einer solchen Ausgestaltung der Steuereinrichtungen ist die Zentraleinheit jederzeit in der Lage, die Kennungen abzufragen und die Konfiguration der Umrichteranordnung hinsichtlich der Bestückung mit Teilmodulen zu überprüfen.

Erfindungsgemäß sind die Steuereinrichtungen der Teilmodule jeweils derart ausgestaltet, dass sie nach jeder Neuinbetriebnahme die Kennung ihres Teilmoduls jeweils selbsttätig und unaufgefordert und/oder auf Anforderung der Zentraleinheit an die Zentraleinheit übermitteln. Bei dieser Ausgestaltung kann die Zentraleinheit nach jeder Neuinbetriebnahme jeweils prüfen, ob die vorgesehene Konfiguration der Umrichteranordnung tatsächlich vorliegt oder eine Abweichung aufgetreten ist.

Bezüglich der Ausgestaltung der Zentraleinheit wird es als vorteilhaft angesehen, wenn diese einen Speicher aufweist, in dem die Zentraleinheit die empfangenen Kennungen der Teilmodule der Umrichteranordnung einbauplatzindividuell abspeichert.

Darüber hinaus wird es als vorteilhaft angesehen, wenn die Zentraleinheit eine Überwachungseinrichtung aufweist, die nach der erstmaligen Inbetriebnahme der Umrichteranordnung oder nach einem Systemneustart der Umrichteranordnung die Kennungen der Teilmodule für jeden elektrischen Einbauplatz empfängt, insbesondere abfragt, die empfangenen Kennungen mit Sollkennungen vergleicht, die manuell oder automatisiert für jeden Einbauplatz erfasst und in einem Solldatensatz gespeichert worden sind, und bei Abweichung der empfangenen Kennungen von der für den jeweiligen elektrischen Einbauplatz gespeicherten Sollkennung eine Fehlerinformation, beispielsweise in Form eines Fehlersignals, erzeugt.

Alternativ oder zusätzlich kann vorgesehen sein, dass die Überwachungseinrichtung derart ausgestaltet ist, dass sie bei Empfang einer jeden Kennung diese mit der zuvor für den jeweiligen elektrischen Einbauplatz abgespeicherten Kennung vergleicht und im Falle einer Abweichung die neue Kennung abspeichert und eine einen Teilmodulwechsel angebende Teilmodulwechselinformation, beispielsweise in Form eines Teilmodulwechselinformationsignals, erzeugt.

Auch ist es möglich, die Überwachungseinrichtung derart auszubilden, dass diese bei dem erstmaligen Empfang einer Kennung eines Teilmoduls einen Zeitstempel - nachfolgend Aktivierungszeitstempel genannt - erzeugt, der den Empfang der Kennung und damit die erstmalige Inbetriebnahme des Teilmoduls in der Umrichteranordnung angibt, und den Aktivierungszeitstempel sowie die Kennung einbauplatzindividuell abspeichert.

Auch ist es von Vorteil, wenn die Zentraleinheit derart ausgestaltet ist, dass sie die einzelnen Teilmodule anhand der Aktivierungszeitstempel jeweils teilmodulindividuell auf ein Erreichen einer vorgegebenen maximalen Laufzeit überwacht und zum Zwecke des Initiierens eines Modulaustauschs oder einer Modulwartung bei Erreichen der maximalen Laufzeit jeweils teilmodulindividuell eine Laufzeitwarninformation, insbesondere ein Laufzeitwarnsignal, erzeugt.

Mit Blick auf eine Erfassung von Laufzeiten der einzelnen Teilmodule wird es als vorteilhaft angesehen, wenn die Zentraleinheit, insbesondere eine Überwachungseinrichtung der Zentraleinheit, derart ausgestaltet ist, dass sie im Falle, dass sie für einen Einbauplatz eine neue Kennung empfängt, für den jeweiligen Einbauplatz die Kennung des neu in Betrieb genommenen Teilmoduls sowie den zugehörigen Aktivierungszeitstempel abspeichert und die Kennung des zuvor aktiven Teilmoduls und dessen Aktivierungszeitstempel abgespeichert lässt.

Besonders vorteilhaft ist es, wenn die Zentraleinheit, insbesondere eine Überwachungseinrichtung der Zentraleinheit, einen Historiendatensatz speichert, in dem für jeden Einbauplatz jeweils die Kennung des aktuell in Betrieb befindlichen Teilmoduls und dessen Aktivierungszeitstempel sowie die Kennungen und Aktivierungszeitstempel aller zuvor für den jeweiligen Einbauplatz in Betrieb gewesenen Teilmodule enthalten sind.

Vorzugsweise ermöglicht die Zentraleinheit eine externe Abfrage des Historiendatensatzes von außen.

Mit Blick auf eine Erfassung von Laufzeiten wird es als vorteilhaft angesehen, wenn die Zentraleinheit, insbesondere eine Überwachungseinrichtung der Zentraleinheit, eine externe Abfrage der Laufzeiten der einzelnen Teilmodule ermöglicht und bei Anliegen eines externen Abfragesignals anhand der einbauplatzindividuell abgespeicherten Kennungen und der einbauplatzindividuell abgespeicherten Aktivierungszeitstempel für jedes der Teilmodule oder für die mit dem externen Abfragesignal ausgewählten Teilmodule eine die jeweilige Laufzeit angebende Laufzeitangabe, insbesondere Betriebsstundenangabe, ausgibt.

Die Zentraleinheit weist bevorzugt eine Recheneinrichtung und einen Speicher auf, in dem ein Überwachungsprogrammmodul gespeichert ist, wobei das Überwachungsprogrammmodul derart ausgestaltet ist, dass die Recheneinrichtung bei Ausführung des Überwachungsprogrammmoduls die erwähnte Überwachungseinrichtung bildet.

Die Erfindung bezieht sich darüber hinaus auf ein Verfahren zum Betreiben einer Umrichteranordnung, die zumindest eine Reihenschaltung mit mindestens zwei in Reihe geschalteten Teilmodulen, die jeweils mindestens einen Schalter aufweisen und jeweils an einem vorgegebenen elektrischen Einbauplatz der Umrichteranordnung eingebaut sind, und eine Zentraleinheit aufweist.

Erfindungsgemäß ist bezüglich eines solchen Verfahrens vorgesehen, dass in einem Speicher der Teilmodule jeweils eine das jeweilige Teilmodul eindeutig identifizierende Kennung, insbesondere Seriennummer, abgespeichert ist, und die abgespeicherten Kennungen der Teilmodule jeweils über eine das jeweilige Teilmodul mit der Zentraleinheit verbindende Kommunikationsverbindung (z. B. draht- oder kabelgebunden, optisch oder elektrisch, oder drahtlos, zum Beispiel per Funk) zu der Zentraleinheit übermittelt werden.

Bezüglich der Vorteile des erfindungsgemäßen Verfahrens wird auf die obigen Ausführungen im Zusammenhang mit der erfindungsgemäßen Umrichteranordnung verwiesen.

Erfindungsgemäß empfängt die Zentraleinheit nach der erstmaligen Inbetriebnahme oder nach einem Systemneustart die Kennungen der Teilmodule für jeden elektrischen Einbauplatz empfängt, insbesondere abfragt, die empfangenen Kennungen mit Sollkennungen, die zuvor manuell oder automatisiert für jeden Einbauplatz der Umrichteranordnung erfasst und in einem Solldatensatz gespeichert worden sind, einbauplatzindividuell vergleicht und im Falle einer Abweichung zwischen einer empfangenen Kennung und der für den jeweiligen elektrischen Einbauplatz gespeicherten Sollkennung eine Fehlerinformation erzeugt.

Darüber hinaus ist es vorteilhaft, wenn die Zentraleinheit bei dem erstmaligen Empfang einer Kennung eines Teilmoduls einen Zeitstempel - nachfolgend Aktivierungszeitstempel genannt - erzeugt, der den Empfang der Kennung und damit die erstmalige Inbetriebnahme des Teilmoduls in der Umrichteranordnung angibt, und den Aktivierungszeitstempel sowie die Kennung einbauplatzindividuell abspeichert, im Falle, dass die Zentraleinheit für einen Einbauplatz eine neue Kennung empfängt, für den jeweiligen Einbauplatz die Kennung des neu in Betrieb genommenen Teilmoduls sowie der zugehörige Aktivierungszeitstempel abgespeichert wird und die Kennung des zuvor betriebenen Teilmoduls und dessen Aktivierungszeitstempel abgespeichert bleiben und ein Historiendatensatz erzeugt und aktualisiert gehalten wird, in dem für jeden Einbauplatz jeweils die Kennung des aktuell in Betrieb befindlichen Teilmoduls und dessen Aktivierungszeitstempel sowie die Kennungen und Aktivierungszeitstempel aller zuvor für den jeweiligen Einbauplatz in Betrieb gewesenen Teilmodule enthalten sind.

Denkbar ist darüber hinaus ein Teilmodul zum Einsatz in einer Umrichteranordnung, wie sie oben beschrieben worden ist. Dazu könnte vorgesehen sein, dass das Teilmodul einen Speicher aufweist, in dem eine das jeweilige Teilmodul eindeutig identifizierende Kennung, insbesondere Seriennummer, abgespeichert ist, und das Teilmodul eine Steuereinrichtung aufweist, die die abgespeicherte Kennung über eine das Teilmodul und eine übergeordnete Zentraleinheit verbindende Kommunikationsverbindung an die Zentraleinheit übermitteln kann.

Bezüglich der Vorteile eines solchen Teilmoduls sei auf die obigen Ausführungen im Zusammenhang mit der erfindungsgemäßen Umrichteranordnung verwiesen.

Die Erfindung wird nachfolgend anhand von Ausführungsbeispielen näher erläutert; dabei zeigen beispielhaft:
- Figur 1: ein Ausführungsbeispiel für eine erfindungsgemäße Umrichteranordnung,
- Figur 2: ein Ausführungsbeispiel für eine Zentraleinheit für die Umrichteranordnung gemäß Figur 1 und
- Figur 3: ein weiteres Ausführungsbeispiel für eine Zent-raleinheit für die Umrichteranordnung gemäß Figur 1.

In den Figuren werden der Übersicht halber für identische oder vergleichbare Komponenten stets dieselben Bezugszeichen verwendet.

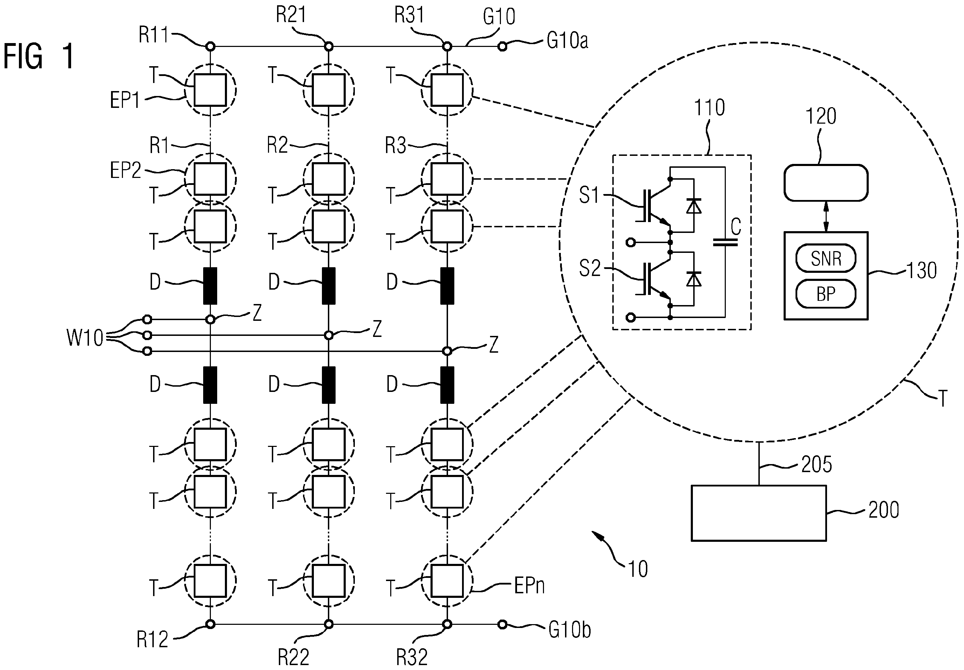

In der Figur 1 ist ein Ausführungsbeispiel für eine dreiphasige Umrichteranordnung 10 gezeigt. Diese umfasst Wechselspannungsanschlüsse W10 zum Einspeisen von Wechselstrom. Darüber hinaus ist sie mit einer Gleichspannungsseite G10 ausgestattet, die zwei Gleichspannungsanschlüsse G10a und G10b umfasst.

Die Umrichteranordnung 10 weist drei parallel geschaltete Reihenschaltungen R1, R2 und R3 auf, deren äußere Anschlüsse R11, R21 und R31 mit dem Gleichspannungsanschluss G10a in Verbindung stehen. Die äußeren Anschlüsse R12, R22 und R32 stehen mit dem Gleichspannungsanschluss G10b der Gleichspannungsseite G10 in Verbindung. Mit anderen Worten bilden also die äußeren Anschlüsse der drei Reihenschaltungen R1, R2 und R3 die Gleichspannungsseite G10 der Umrichteranordnung 10.

Jede der drei Reihenschaltungen R1, R2 und R3 ist bei dem Ausführungsbeispiel gemäß Figur 1 jeweils mit sechs in Reihe geschalteten Teilmodulen T sowie zwei Induktivitäten D ausgestattet. Jeweils zwischen den zwei Induktivitäten D befindet sich ein Zwischenanschluss Z, der potentialmäßig zwischen den in der Figur 1 oberen drei Teilmodulen und den in Figur 1 unteren drei Teilmodulen liegt und einen der drei Wechselspannungsanschlüsse W10 der Umrichteranordnung 10 bildet.

Die örtlichen bzw. räumlichen Einbauplätze der Teilmodule T sind in der Figur 1 mit Bezugszeichen EP1, EP2,...,EPn markiert.

In der Figur 1 lässt sich darüber hinaus ein möglicher Aufbau für die Teilmodule T erkennen. Bei dem Ausführungsbeispiel gemäß Figur 1 weist jedes der Teilmodule T jeweils eine Schalteinheit 110 mit zwei Schaltern S1 und S2, die eine Halbbrücke bilden, und einen Kondensator C auf. Alternativ können die Schalteinheiten 110 auch vier Schalter aufweisen, die eine Vollbrücke bilden.

Die Ansteuerung der Schalter S1 und S2 erfolgt vorzugsweise durch eine Zentraleinheit 200, sei es unmittelbar oder mittelbar unter Einbezug einer moduleigenen Steuereinrichtung 120. Soll in dem Kondensator C elektrische Energie gespeichert werden, so werden die Schalter S1 und S2 derart angesteuert, dass ein Energiefluss in Richtung des Kondensator C erfolgt; soll aus dem Kondensator C elektrische Energie entnommen werden, so werden die Schalter S1 und S2 entsprechend derart angesteuert, dass ein Energiefluss in Richtung der jeweiligen Reihenschaltung R1, R2 oder R3 erfolgt.

Die moduleigene Steuereinrichtung 120 steht bei den Teilmodulen T jeweils mit einem moduleigenen Speicher 130 in Verbindung, in dem eine das jeweilige Teilmodul T eindeutig identifizierende Kennung in Form einer Seriennummer SNR abgespeichert ist.

Die Steuereinrichtungen 120 der Teilmodule T sind vorzugsweise jeweils derart ausgestaltet, dass sie nach Aufforderung durch die Zentraleinheit 200 jeweils ihre Seriennummer SNR an die Zentraleinheit 200 übermitteln. Zur Übermittlung ist bei dem Ausführungsbeispiel gemäß Figur 1 eine Kommunikationsverbindung 205 vorgesehen.

Die Steuereinrichtungen 120 der Teilmodule T sind vorzugsweise außerdem derart ausgestaltet, dass sie nach jeder Neuinbetriebnahme ihre Seriennummer SNR an die Zentraleinheit 200 übermitteln, sei es selbsttätig und unaufgefordert oder alternativ nach Aufforderung durch die Zentraleinheit 200.

Die Steuereinrichtungen 120 können durch Recheneinrichtungen gebildet sein, die nach Programmierung mittels eines Betriebsprogramms BP die Recheneinrichtungen zu den beschriebenen moduleigenen Steuereinrichtungen machen. Das Betriebsprogramm BP kann beispielsweise in dem moduleigenen Speicher 130 oder in einem anderen Speicher des jeweiligen Teilmoduls T abgespeichert sein.

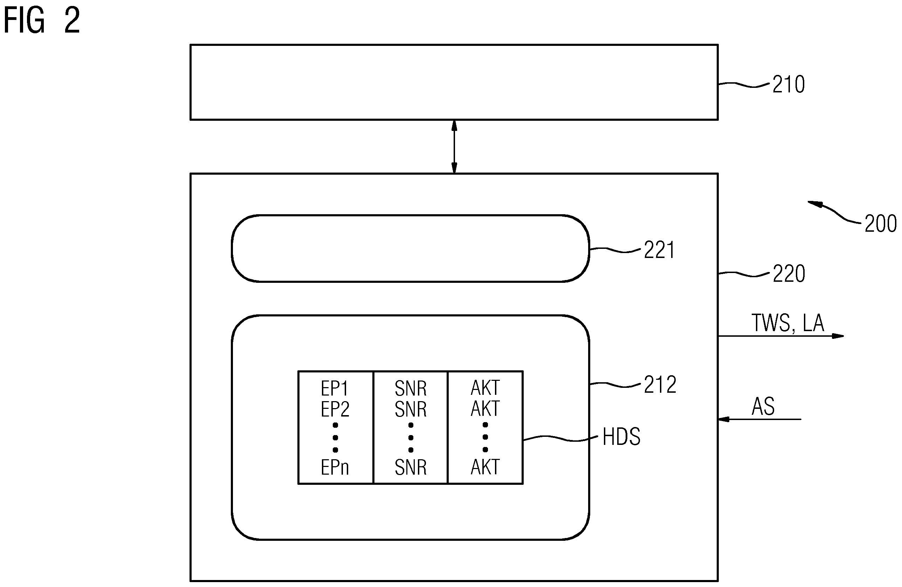

Die Figur 2 zeigt ein Ausführungsbeispiel für die Zentraleinheit 200 der Umrichteranordnung 10 gemäß Figur 1 näher im Detail. Die Zentraleinheit 200 umfasst eine Recheneinrichtung 210 sowie einen Speicher 220.

In dem Speicher 220 ist ein Überwachungsprogrammmodul 221 abgespeichert, das nach Ausführung durch die Recheneinrichtung 210 diese derart programmiert, dass die Recheneinrichtung 210 die Funktion einer Überwachungseinrichtung für die Teilmodule T der Umrichteranordnung 10 gemäß Figur 1 wahrnimmt.

In dem Speicher 220 ist darüber hinaus ein Speicherbereich 212 vorgesehen, in dem die Zentraleinheit 200 die empfangenen Seriennummern SNR der Teilmodule T gemäß Figur 1 einbauplatzindividuell abspeichert. Die Abspeicherung kann beispielsweise in Form einer Tabelle erfolgen, in der für jeden Einbauplatz EP1, EP2, ..., EPn die Seriennummer SNR des jeweiligen Teilmoduls T sowie vorzugsweise ein Aktivierungszeitstempel AKT eingetragen sind. Die Aktivierungszeitstempel AKT geben jeweils den erstmaligen Empfang der jeweiligen Seriennummer SNR des jeweiligen Teilmoduls T für den jeweiligen Einbauplatz und damit auch die erstmalige Inbetriebnahme eines jeden Teilmoduls T in der Umrichteranordnung 10 gemäß Figur 1 einbauplatzindividuell an.

Besonders vorteilhaft ist es, wenn die Zentraleinheit 200 im Falle, dass sie für einen Einbauplatz eine neue Seriennummer SNR empfängt, für den jeweiligen Einbauplatz die Seriennummer SNR des neu in Betrieb genommenen Teilmoduls T sowie den Zeitpunkt der jeweiligen Aktivierung in Form eines Aktivierungszeitstempels AKT zusätzlich abspeichert. Im Falle einer solchen Ausgestaltung wird in dem Speicherbereich 212 also mit anderen Worten eine Art Historiendatensatz HDS gespeichert, in dem für jeden Einbauplatz jeweils die Seriennummer des aktuell in Betrieb befindlichen Teilmoduls T und dessen Aktivierungszeitstempel sowie die Seriennummern und Aktivierungszeitstempel aller zuvor für den jeweiligen Einbauplatz in Betrieb gewesenen Teilmodule T enthalten sind.

Das Überwachungsprogrammmodul 221 und damit die Zentraleinheit 200 insgesamt ist vorzugsweise derart ausgestaltet, dass sie die Seriennummern der Teilmodule T regelmäßig oder unregelmäßig abfragt und bei Empfang einer jeden Seriennummer diese mit der zuvor für den jeweiligen elektrischen Einbauplatz abgespeicherten Seriennummer vergleicht und im Falle einer Abweichung die neue Seriennummer abspeichert und eine einen Teilmodulwechsel angebende Teilmodulwechselinformation, beispielsweise in Form eines Teilmodulwechselsignals TWS, erzeugt.

Die Zentraleinheit 200 bzw. deren Überwachungsprogrammmodul 221 sind darüber hinaus vorzugsweise derart ausgestaltet, dass die Zentraleinheit 200 eine externe Abfrage der Laufzeiten der einzelnen Teilmodule T ermöglicht und bei Anliegen eines externen Abfragesignals AS anhand der einbauplatzindividuell abgespeicherten Seriennummern SNR und der einbauplatzindividuell abgespeicherten Aktivierungszeitstempel AKT für jedes der Teilmodule T oder für die mit dem externen Abfragesignal AS ausgewählten Teilmodule jeweils eine Laufzeitangabe LA, insbesondere beispielsweise in Form einer Betriebsstundenangabe, ausgibt, die die jeweilige Laufzeit des Teilmoduls T angibt.

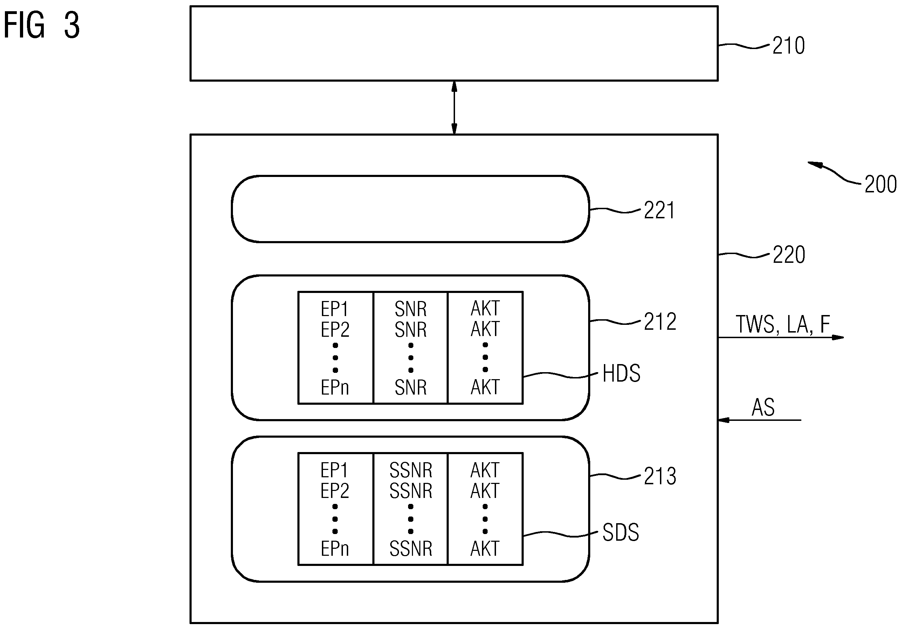

Die Figur 3 zeigt ein weiteres Ausführungsbeispiel für eine Zentraleinheit 200, die zur Ansteuerung der Teilmodule T der Umrichteranordnung 10 gemäß Figur 1 geeignet ist. Die Zentraleinheit 200 weist einen Speicher 220 auf, in dem zusätzlich zu dem Überwachungsprogrammmodul 221 und dem Speicherbereich 212 ein weiterer Speicherbereich 213 vorgesehen ist. In dem weiteren Speicherbereich 213 kann ein Solldatensatz SDS gespeichert werden. Der Solldatensatz SDS gibt für jeden Einbauplatz der Umrichteranordnung 10 gemäß Figur 1 jeweils eine Sollkennung in Form einer Sollseriennummer SSNR an, die das am jeweiligen elektrischen Einbauplatz installierte Teilmodul T - gemäß einem vorgegebenen Einbauplan oder einer zuvor vorgenommenen Erfassung der Einbausituation - bei der erstmaligen Inbetriebnahme aufweisen müsste. Die Sollseriennummern SSNR können beispielsweise manuell oder automatisiert für jeden Einbauplatz vor der erstmaligen Inbetriebnahme erfasst worden sein.

Die Zentraleinheit 200 bzw. die mittels des Überwachungsprogrammmoduls 221 programmierte Recheneinrichtung 210 fragt vorzugsweise nach oder bei der erstmaligen Inbetriebnahme der Umrichteranordnung 10 oder auch nach jedem Systemneustart der Umrichteranordnung 10 gemäß Figur 1 die Kennungen der Teilmodule T für jeden elektrischen Einbauplatz ab und vergleicht die empfangenden Seriennummern mit den Sollseriennummern SSNR, die im Solldatensatz SDS gespeichert sind. Stellt die Zentraleinheit 200 dabei eine Abweichung zwischen den empfangenen Seriennummern und den für den jeweiligen elektrischen Einbauplatz gespeicherten Sollseriennummern fest, so erzeugt sie eine Fehlerinformation, beispielsweise in Form eines Fehlersignals F.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Umrichteranordnung
- 110: Schalteinheit
- 120: Steuereinrichtung
- 130: Speicher
- 200: Zentraleinheit
- 205: Kommunikationsverbindung
- 210: Recheneinrichtung
- 212: Speicherbereich
- 213: Speicherbereich
- 220: Speicher
- 221: Überwachungsprogrammmodul

- AKT: Aktivierungszeitstempel
- AS: Abfragesignal
- BP: Betriebsprogramm
- C: Kondensator
- D: Induktivität
- EP1: Einbauplatz
- EP2: Einbauplatz
- EPn: Einbauplatz
- F: Fehlersignal
- G10: Gleichspannungsseite
- G10a, G10b: Gleichspannungsanschluss
- HDS: Historiendatensatz
- LA: Laufzeitangabe
- R1, R2, R3: Reihenschaltung
- R11, R21, R31: äußerer Anschluss
- R12, R22, R32: äußerer Anschluss
- S1, S2: Schalter
- SDS: Solldatensatz
- SNR: Seriennummer
- SSNR: Sollseriennummer
- T: Teilmodul
- TWS: Teilmodulwechselsignal
- W10: Wechselspannungsanschluss
- Z: Zwischenanschluss

## Patentansprüche

1. Umrichteranordnung (10) mit zumindest einer Reihenschaltung (R1, R2, R3) mit mindestens zwei in Reihe geschalteten Teilmodulen (T), die jeweils mindestens einen Schalter (S1, S2) aufweisen und jeweils an einem vorgegebenen elektrischen Einbauplatz (EP1, EP2, EPn) der Umrichteranordnung (10) eingebaut sind, und einer mit den Teilmodulen (T) in Verbindung stehenden Zentraleinheit (200) zum Ansteuern der Teilmodule (T), wobei
- die Teilmodule (T) jeweils einen Speicher (130) aufweisen, in dem eine das jeweilige Teilmodul (T) eindeutig identifizierende Kennung (SNR), insbesondere Seriennummer, abgespeichert ist, und
die Teilmodule (T) jeweils eine Steuereinrichtung (120) aufweisen, die die abgespeicherte Kennung (SNR) über eine das jeweilige Teilmodul (T) und die Zentraleinheit (200) verbindende Kommunikationsverbindung an die Zentraleinheit (200) übermitteln kann,
**dadurch gekennzeichnet, dass** die Steuereinrichtungen (120) der Teilmodule (T) jeweils derart ausgestaltet sind, dass sie nach jeder Neuinbetriebnahme die Kennung (SNR) ihres Teilmoduls (T) jeweils selbsttätig und unaufgefordert oder auf Anforderung durch die Zentraleinheit (200) an die Zentraleinheit (200) übermitteln.

2. Umrichteranordnung (10) nach Anspruch 1,
**dadurch gekennzeichnet, dass**
die Steuereinrichtungen (120) der Teilmodule (T) jeweils derart ausgestaltet sind, dass sie nach Aufforderung durch die Zentraleinheit (200) die Kennung (SNR) ihres Teilmoduls (T) an die Zentraleinheit (200) übermitteln.

3. Umrichteranordnung (10) nach einem der voranstehenden Ansprüche,
**dadurch gekennzeichnet, dass**
die Zentraleinheit (200) einen Speicher (220) aufweist, in dem die Zentraleinheit (200) die empfangenen Kennungen (SNR) der Teilmodule (T) der Umrichteranordnung (10) einbauplatzindividuell abspeichert.

4. Umrichteranordnung (10) nach einem der voranstehenden Ansprüche,
**dadurch gekennzeichnet, dass**
die Zentraleinheit (200) eine Überwachungseinrichtung aufweist, die nach der erstmaligen Inbetriebnahme der Umrichteranordnung (10) oder nach einem Systemneustart der Umrichteranordnung (10) die Kennungen (SNR) der Teilmodule (T) für jeden elektrischen Einbauplatz (EP1, EP2, EPn) empfängt, insbesondere abfragt, die empfangenen Kennungen (SNR) mit Sollkennungen (SSNR) vergleicht, die manuell oder automatisiert für jeden Einbauplatz (EP1, EP2, EPn) erfasst und in einem Solldatensatz (SDS) gespeichert worden sind, und bei Abweichung der empfangenen Kennungen (SNR) von der für den jeweiligen elektrischen Einbauplatz (EP1, EP2, EPn) gespeicherten Sollkennung (SSNR) eine Fehlerinformation erzeugt.

5. Umrichteranordnung (10) nach einem der voranstehenden Ansprüche,
**dadurch gekennzeichnet, dass**
die Zentraleinheit (200) eine Überwachungseinrichtung aufweist, die bei Empfang einer jeden Kennung (SNR) diese mit der zuvor für den jeweiligen elektrischen Einbauplatz (EP1, EP2, EPn) abgespeicherten Kennung (SNR) vergleicht und im Falle einer Abweichung die neue Kennung (SNR) abspeichert und eine einen Teilmodulwechsel angebende Teilmodulwechselinformation erzeugt.

6. Umrichteranordnung (10) nach einem der voranstehenden Ansprüche,
**dadurch gekennzeichnet, dass**
die Zentraleinheit (200) eine Überwachungseinrichtung aufweist, die bei dem erstmaligen Empfang einer Kennung (SNR) eines Teilmoduls (T) einen Zeitstempel - nachfolgend Aktivierungszeitstempel (AKT) genannt - erzeugt, der den Empfang der Kennung (SNR) und damit die erstmalige Inbetriebnahme des Teilmoduls (T) in der Umrichteranordnung (10) angibt, und den Aktivierungszeitstempel (AKT) sowie die Kennung (SNR) einbauplatzindividuell abspeichert.

7. Umrichteranordnung (10) nach einem der voranstehenden Ansprüche,
**dadurch gekennzeichnet, dass**
die Zentraleinheit (200), insbesondere eine Überwachungseinrichtung der Zentraleinheit (200), derart ausgestaltet ist, dass sie im Falle, dass sie für einen Einbauplatz (EP1, EP2, EPn) eine neue Kennung (SNR) empfängt, für den jeweiligen Einbauplatz (EP1, EP2, EPn) die Kennung (SNR) des neu in Betrieb genommenen Teilmoduls (T) sowie den zugehörigen Aktivierungszeitstempel (AKT) abspeichert und die Kennung (SNR) des zuvor aktiven Teilmoduls (T) und dessen Aktivierungszeitstempel (AKT) abgespeichert lässt.

8. Umrichteranordnung (10) nach einem der voranstehenden Ansprüche,
**dadurch gekennzeichnet, dass**
- die Zentraleinheit (200) eine Recheneinrichtung (210) und einen Speicher (130) aufweist, in dem ein Überwachungsprogrammmodul (221) gespeichert ist, wobei
- das Überwachungsprogrammmodul (221) derart ausgestaltet ist, dass die Recheneinrichtung (210) bei Ausführung des Überwachungsprogrammmoduls die erwähnte Überwachungseinrichtung bildet.

9. Verfahren zum Betreiben einer Umrichteranordnung (10), die zumindest eine Reihenschaltung (R1, R2, R3) mit mindestens zwei in Reihe geschalteten Teilmodulen (T), die jeweils mindestens einen Schalter (S1, S2) aufweisen und jeweils an einem vorgegebenen elektrischen Einbauplatz (EP1, EP2, EPn) der Umrichteranordnung (10) eingebaut sind, und eine Zentraleinheit (200) aufweist, wobei
- in einem Speicher (130) der Teilmodule (T) jeweils eine das jeweilige Teilmodul (T) eindeutig identifizierende Kennung (SNR), insbesondere Seriennummer, abgespeichert ist, und
die abgespeicherten Kennungen (SNR) der Teilmodule (T) jeweils über eine das jeweilige Teilmodul (T) mit der Zentraleinheit (200) verbindende Kommunikationsverbindung zu der Zentraleinheit (200) übermittelt werden, **dadurch ge kennzeichnet**, dass
- die Zentraleinheit (200) nach der erstmaligen Inbetriebnahme oder nach einem Systemneustart die Kennungen (SNR) der Teilmodule (T) für jeden elektrischen Einbauplatz (EP1, EP2, EPn) empfängt, insbesondere abfragt,
- die Zentraleinheit (200) die empfangenen Kennungen (SNR) mit Sollkennungen (SSNR), die zuvor manuell oder automatisiert für jeden Einbauplatz (EP1, EP2, EPn) der Umrichteranordnung (10) erfasst und in einem Solldatensatz gespeichert worden sind, einbauplatzindividuell vergleicht und
- die Zentraleinheit (200) im Falle einer Abweichung zwischen einer empfangenen Kennung (SNR) und der für den jeweiligen elektrischen Einbauplatz (EP1, EP2, EPn) gespeicherten Sollkennung (SSNR) eine Fehlerinformation erzeugt.

## Claims

1. Converter arrangement (10) with at least one series circuit (R1, R2, R3) with at least two series-connected sub-modules (T) which in each case have at least one switch (S1, S2) and are installed in each case at a predefined electrical installation position (EP1, EP2, EPn) of the converter arrangement (10), and a central unit (200) connected to the sub-modules (T) to control the sub-modules (T), wherein
- the sub-modules (T) in each case have a memory (130) in which an identifier (SNR), in particular a serial number, uniquely identifying the respective sub-module (T), is stored, and
the sub-modules (T) in each case have a control device (120) which can forward the stored identifier (SNR) to the central unit (200) via a communication connection connecting the respective sub-module (T) and the central unit (200), **characterized in that** the control devices (120) of the sub-modules (T) are designed in each case in such a way that, following each recommissioning, they forward the identifier (SNR) of their sub-module (T) to the central unit (200) in each case independently and unprompted, or prompted by the central unit (200).

2. Converter arrangement (10) according to Claim 1, **characterized in that**
the control devices (120) of the sub-modules (T) are designed in each case in such a way that, when prompted by the central unit (200), they forward the identifier (SNR) of their sub-module (T) to the central unit (200).

3. Converter arrangement (10) according to either of the preceding claims,
**characterized in that**
the central unit (200) has a memory (220) in which the central unit (200) stores the received identifiers (SNR) of the sub-modules (T) of the converter arrangement (10) for each individual installation position.

4. Converter arrangement (10) according to one of the preceding claims,
**characterized in that**
the central unit (200) has a monitoring device which, following the initial commissioning of the converter arrangement (10) or following a system restart of the converter arrangement (10), receives, in particular queries, the identifiers (SNR) of the sub-modules (T) for each electrical installation position (EP1, EP2, EPn), compares the received identifiers (SNR) with reference identifiers (SSNR) which have been manually or automatically recorded and stored in a reference dataset (SDS) for each installation position (EP1, EP2, EPn), and, in the event of a discrepancy between the received identifiers (SNR) and the reference identifier (SSNR) stored for the respective electrical installation position (EP1, EP2, EPn), generates error information.

5. Converter arrangement (10) according to one of the preceding claims,
**characterized in that**
the central unit (200) has a monitoring device, which, on receiving each identifier (SNR), compares the latter with the identifier (SNR) previously stored for the respective electrical installation position (EP1, EP2, EPn) and, in the event of a discrepancy, stores the new identifier (SNR) and generates sub-module exchange information indicating a sub-module exchange.

6. Converter arrangement (10) according to one of the preceding claims,
**characterized in that**
the central unit (200) has a monitoring device which, on receiving an identifier (SNR) of a sub-module (T) for the first time, generates a timestamp, referred to below as an activation timestamp (AKT), which indicates the reception of the identifier (SNR) and therefore the initial commissioning of the sub-module (T) in the converter arrangement (10), and stores the activation timestamp (AKT) and the identifier (SNR) for each individual installation position.

7. Converter arrangement (10) according to one of the preceding claims,
**characterized in that**
the central unit (200), in particular a monitoring device of the central unit (200), is designed in such a way that, if it receives a new identifier (SNR) for an installation position (EP1, EP2, EPn), it stores the identifier (SNR) of the recommissioned sub-module (T) and the associated activation timestamp (AKT) for the respective installation position (EP1, EP2, EPn) and retains the identifier (SNR) of the previously active sub-module (T) and its activation timestamp (AKT).

8. Converter arrangement (10) according to one of the preceding claims,
**characterized in that**
- the central unit (200) has a processing device (210) and a memory (130) in which a monitoring program module (221) is stored, wherein
- the monitoring program module (221) is designed in such a way that the processing device (210) forms the aforementioned monitoring device when the monitoring program module is executed.

9. Method for operating a converter arrangement (10) which has at least one series circuit (R1, R2, R3) with at least two series-connected sub-modules (T) which in each case have at least one switch (S1, S2) and are installed in each case at a predefined electrical installation position (EP1, EP2, EPn) of the converter arrangement (10), and a central unit (200), wherein
- an identifier (SNR), in particular a serial number, uniquely identifying the sub-module (T) is stored in each case in a memory (130) of the sub-modules (T), and
the stored identifiers (SNR) of the sub-modules (T) are forwarded in each case to the central unit (200) via a communication connection connecting the respective sub-module (T) to the central unit (200), **characterized in that**
- following the initial commissioning or following a system restart, the central unit (200) receives, in particular queries, the identifiers (SNR) of the sub-modules (T) for each electrical installation position (EP1, EP2, EPn),
- the central unit (200) compares the received identifiers (SNR) for each individual installation position with reference identifiers (SSNR) which have previously been manually or automatically recorded and stored in a reference dataset for each installation position (EP1, EP2, EPn) of the converter arrangement (10) and,
- in the event of a discrepancy between a received identifier (SNR) and the reference identifier (SSNR) stored for the respective electrical installation position (EP1, EP2, EPn), generates error information.

## Revendications

1. Système (10) de convertisseur, comprenant au moins un circuit (R1, R2, R3) série ayant au moins deux sous-modules (T) montés en série, qui ont chacun au moins un interrupteur (S1, S2) et qui sont montés chacun en un emplacement (EP1, EP2, EPn) de montage électrique donné à l'avance du système (10) de convertisseur, et une unité (200) centrale en liaison avec les sous-modules (T) pour commander les sous-modules (T), dans lequel
- les sous-modules (T) ont chacun une mémoire (130), dans laquelle est mémorisée une caractérisation (SNR), notamment un numéro de série, identifiant de manière univoque le sous-module (T) respectif et
les sous-modules (T) ont chacun un dispositif (120) de commande, qui peut transmettre, à l'unité (200) centrale, la caractérisation (SNR) mémorisée, par une liaison de communication reliant le sous-module (T) respectif et l'unité (200) centrale,
**caractérisé en ce que** les dispositifs (120) de commande des sous-modules (T) sont conformés chacun de manière à transmettre à l'unité (200) centrale, après chaque mise en service, la caractérisation (SNR) de son sous-module (T) automatiquement et sans invitation ou sur invitation de l'unité (200) centrale.

2. Système (10) de convertisseur suivant la revendication 1, **caractérisé en ce que**
les dispositifs (120) de commande des sous-modules (T) sont conformés de manière à transmettre chacun, à l'unité (200) centrale, la caractérisation (SNR) de leur sous-module (T), à l'invitation de l'unité (200) centrale.

3. Système (10) de convertisseur suivant l'une des revendications précédentes,
**caractérisé en ce que**
l'unité (200) centrale a une mémoire (220), dans laquelle l'unité (200) centrale mémorise, individuellement par emplacement de montage, les caractérisations (SNR) reçues des sous-modules (T) du système (10) de convertisseur.

4. Système (10) de convertisseur suivant l'une des revendications précédentes,
**caractérisé en ce que**
l'unité (200) centrale a un dispositif de contrôle, qui, après la mise en service pour la première fois du système (10) de convertisseur ou après un redémarrage du système (10) de convertisseur, reçoit, notamment en les demandant, les caractérisations (SNR) des sous-modules (T) pour chaque emplacement (EP1, EP2, EPn) de montage électrique, compare les caractérisations (SNR) reçues à des caractérisations (SSNR) de consigne, qui sont relevées manuellement ou de manière automatisée pour chaque emplacement (EP1, EP2, EPn) de montage et qui ont été mémorisées dans un jeu (SDS) de données de consigne, et, s'il y a un écart entre les caractérisations (SNR) reçues et la caractérisation (SSNR) de consigne mémorisée pour l'emplacement (EP1, EP2, EPn) de montage électrique respectif, produit une information d'erreur.

5. Système (10) de convertisseur suivant l'une des revendications précédentes,
**caractérisé en ce que**
l'unité (200) centrale a un dispositif de contrôle, qui, à la réception de chaque caractérisation (SNR), la compare à la caractérisation (SNR) mémorisée auparavant pour l'emplacement (EP1, EP2, EPn) de montage électrique respectif et, s'il y a un écart, mémorise la caractérisation (SNR) nouvelle et produit une information de changement de sous-module indiquant un changement de sous-module.

6. Système (10) de convertisseur suivant l'une des revendications précédentes,
**caractérisé en ce que**
l'unité (200) centrale a un dispositif de contrôle, qui, à la réception pour la première fois d'une caractérisation (SNR) d'un sous-module (T), produit un horodatage - dénommé ci-après horodatage (AKT) d'activation -, qui indique la réception de la caractérisation (SNR) et ainsi la mise en service pour la première fois du sous-module (T) dans le système (10) de convertisseur, et mémorise l'horodatage (AKT) d'activation, ainsi que la caractérisation (SNR) d'une manière individuelle à l'emplacement de montage.

7. Système (10) de convertisseur suivant l'une des revendications précédentes,
**caractérisé en ce que**
l'unité (200) centrale, notamment un dispositif de contrôle de l'unité (200) centrale, est conformée de manière à mémoriser, dans le cas de la réception d'une caractérisation (SNR) nouvelle pour un emplacement (EP1, EP2, EPn) de montage pour l'emplacement (EP1, EP2, EPn) de montage respectif, la caractérisation (SNR) du sous-module (T) mise en service nouvellement, ainsi que l'horodatage (AKT) d'activation associé, et peut mettre en mémoire la caractérisation (SNR) du sous-module (T) actif auparavant et son horodatage (AKT) d'activation.

8. Système (10) de convertisseur suivant l'une des revendications précédentes,
**caractérisé en ce que**
- l'unité (200) centrale a un dispositif (210) informatique et une mémoire (130), dans laquelle un module (221) de programme de contrôle est mémorisé, dans lequel
- le module (221) de programme de contrôle est conformé, de manière à ce que le dispositif (210) informatique forme, lorsque le module de programme de contrôle est réalisé, le dispositif de contrôle mentionné.

9. Procédé pour faire fonctionner un système (10) de convertisseur, qui a au moins un circuit (R1, R2, R3) ayant au moins deux sous-modules (T), qui sont montés en série, qui ont chacun au moins un interrupteur (S1, S2) et qui sont montés chacun en un emplacement (EP1, EP2, Epn) de montage électrique donné à l'avance du système (10) de convertisseur, et une unité (200) centrale, dans lequel
- on mémorise, dans une mémoire (130) des sous-modules (T), respectivement une caractérisation (SNR), notamment un numéro de série, identifiant de manière univoque le sous-module (T) respectif et
on transmet, à l'unité (200) centrale, les caractérisations (SNR) mémorisées des sous-modules (T), respectivement par une liaison de communication reliant le sous-module (T) respectif à l'unité (200) centrale, **caractérisé en ce que**
- l'unité (200) centrale reçoit, notamment en le demandant, après la mise en service pour la première fois ou après un redémarrage du système, les caractérisations (SNR) des sous-modules (T), pour chaque emplacement (EP1, EP3, EPn) de montage électrique,
- l'unité (200) centrale compare, individuellement par emplacement de montage, les caractérisations (SNR) reçues à des caractérisations (SSNR) de consigne, qui ont été relevées auparavant, manuellement ou de manière automatisée, pour chaque emplacement (EP1, EP2, EPn) de montage du système (10) de convertisseur et mémorisées dans un jeu de données de consigne, et
- l'unité (200) centrale produit une information d'erreur, dans le cas d'un écart entre une caractérisation (SNR) reçue et la caractérisation (SSNR) de consigne mémorisée, pour l'emplacement (EP1, EP2, EPn) de montage électrique respectif.
